Europäisches Patentamt

European Patent Office

Office européen des brevets

(19)

(11) Numéro de publication : **0 148 467 B1**

(12) **FASCICULE DE BREVET EUROPÉEN**

(45) Date de publication du fascicule du brevet :
02.03.88

(51) Int. Cl.⁴ : **H 02 P   7/29**, H 02 M   3/137

(21) Numéro de dépôt : **84115703.5**

(22) Date de dépôt : **18.12.84**

(54) **Procédé et dispositif électronique de commande et de régulation de l'intensité du courant d'alimentation d'un moteur électrique alimenté par une source de courant continu à tension fixe.**

(30) Priorité : **21.12.83 FR 8320511**

(43) Date de publication de la demande :
**17.07.85 Bulletin 85/29**

(45) Mention de la délivrance du brevet :
**02.03.88 Bulletin 88/09**

(84) Etats contractants désignés :
**DE GB IT**

(56) Documents cités :
**CH-A-   461 573**
**DE-A- 1 463 608**
**FR-A- 2 232 863**

(73) Titulaire : **Petit, Jean Claude**
**50 Rue Robert Gaillard**
**F-86100 Chatellerault (FR)**

(72) Inventeur : **Petit, Jean Claude**
**50 Rue Robert Gaillard**
**F-86100 Chatellerault (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

Jouve, 18, rue St-Denis, 75001 Paris, France

## Description

L'invention concerne la commande des moteurs électriques alimentés par une source de courant continu, avec comme application principale les véhicules électriques à accumulateur.

La commande des moteurs à courant continu de puissance est habituellement assurée par une variation artificielle de la tension aux bornes du moteur, tension qui est engendrée à partir de la tension constante de la source à l'aide d'un hacheur à rapport cyclique variable.

Pour un tel hacheur, le montage le plus couramment utilisé est le montage dénommé Jones, décrit en particulier dans le manuel de la Société Générale Electrique intitulée « SCR MANUAL, 6th edition », 1979, pages 237 à 239. On en trouve également un exposé dans l'ouvrage de Marcel MOUNIC « Semiconducteurs » 3e partie, paru aux Editions Foucher à Paris, en 1973, page 52.

Un tel hacheur comporte essentiellement deux thyristors, ou dispositifs de commutation à avalanche équivalents, utilisés l'un pour l'établissement de la conduction dans le circuit moteur et l'autre pour la décharge d'un condensateur appliquant une tension inverse au premier thyristor afin de produire son extinction. La commande d'un tel hacheur revient donc à envoyer les impulsions voulues aux deux gâchettes des deux thyristors avec une fréquence et un déphasage convenables, de manière que cette commande cyclique de l'allumage et de l'extinction produise une tension moyenne aux bornes du moteur.

Pour que le rendement global reste acceptable, la fréquence de fonctionnement du hacheur doit être relativement basse, mais d'autre part le rapport cyclique doit permettre une variation de près de 0 à 99 % de la puissance maximum. En général on commence par un temps de conduction de 1 mS et un temps de non-conduction de 20 mS, et on augmente la puissance en réduisant progressivement le temps de non-conduction jusqu'à environ 1 mS, le temps de conduction restant contant, puis en augmentant le temps de conduction jusqu'à environ 60 mS, le temps de non-conduction restant constant.

L'inconvénient d'une telle commande par variation de tension est que l'on n'est pas maître de l'intensité parcourant le moteur. En effet, cette intensité I s'exprime habituellement par la formule :

$$I = U — FCEM/R$$

dans laquelle FCEM représente traditionnellement la force contre-électromotrice, qui est égale à zéro lorsque la vitesse du moteur est nulle, et qui devient négative lorsque la vitesse du moteur est inversée. U est la tension aux bornes et R la résistance du moteur.

Dans ces conditions lorsque le moteur a une vitesse de rotation normale, l'intensité parcourant le moteur est normale et dépend du couple résistant ainsi que du couple-moteur, résultant lui-même de la commande par le conducteur du rapport cyclique du hacheur qui détermine la valeur de U. Par contre si le moteur ne tourne pas, par exemple lors d'un démarrage brutal, d'un effort important ou d'une anomalie quelconque, l'intensité, par application de la formule ci-dessus, devient I = U/R, et comme R est très faible, I devient très important. Il y a pratiquement un court-circuit qui fait déclencher les dispositifs de sécurité. Inversement lorsque l'on procède au freinage électrique du moteur, celui-ci est alimenté en inversion de polarité, ce qui revient à dire que la force contre-électromotrice FCEM devient négative, et la formule ci-dessus montre que la tension aux bornes du moteur est pratiquement doublée, de sorte que l'intensité prend une valeur très anormale qui fait encore déclencher les dispositifs de sécurité.

On connaît aussi d'après le document CH-A-461 573 un dispositif de commande qui tient compte de l'intensité parcourant le moteur en élaborant une tension proportionnelle à cette intensité moteur et en la comparant à une tension de consigne pour commander l'allumage et l'extinction lorsque la différence franchit un seuil par valeurs croissantes ou décroissantes. Un tel dispositif n'élimine cependant pas complètement les inconvénients signalés.

Le procédé selon l'invention prévoit d'élaborer également un tel signal de comparaison, mais se caractérise par le fait qu'en fonction du résultat de cette comparaison on produit la charge progressive positive ou négative d'un condensateur de mémoire dont la tension de charge est elle-même comparée à une tension de référence, que l'on détermine l'instant auquel cette tension de charge dépasse ladite tension de référence, puis qu'après un délai temporisé on produit le signal de début de conduction destiné au hacheur, ce qui a pour effet de réduire progressivement l'écart entre les deux signaux de mesure et de consigne, que lorsque l'on a détecté que le niveau de charge du condensateur de mémoire repasse par la valeur du signal de référence on décompte une deuxième temporisation pendant laquelle on laisse descendre cette tension du condensateur de mémoire, l'état de charge négative ainsi obtenu au bout de cette temporisation étant fonction de l'intensité dans le moteur, puis que l'on produit après cette temporisation le signal de début de non-conduction, ce qui produit la remontée de la tension de charge du condensateur de mémoire qui repasse à nouveau la valeur de référence, et ainsi de suite.

Le dispositif selon l'invention, pour la mise en œuvre de ce procédé, se caractérise par le fait qu'il comporte, en plus d'un shunt pour l'élaboration du signal représentatif de l'intensité moteur et des montages potentiométriques pour l'élaboration du signal de consigne, un amplificateur différentiel de mesure pour la comparaison de ces signaux et l'élaboration d'un niveau de tension qui charge un condensateur de mémoire par un circuit de charge positive, et un circuit de charge négative, ainsi qu'un comparateur qui compare le niveau de charge du condensateur de mémoire à une tension de référence et élabore un signal qui actionne un multivibrateur après une temporisation pour un sens de basculement, et par une autre temporisation pour l'autre sens de basculement de ce comparateur.

D'autres particularités de l'invention apparaîtront dans la description qui va suivre d'un mode de réalisation pris comme exemple et représenté sur le dessin annexé sur lequel :

la figure 1 représente le schéma de commande du moteur ;

la figure 2 représente le schéma de chaque circuit de commande des gâchettes des thyristors à partir des signaux logiques correspondants ;

la figure 3 représente le schéma général du circuit destiné à élaborer les signaux logiques de commande ; et

la figure 4 la courbe représentative en fonction du temps des tensions d'entrées et de sortie du comparateur (A1).

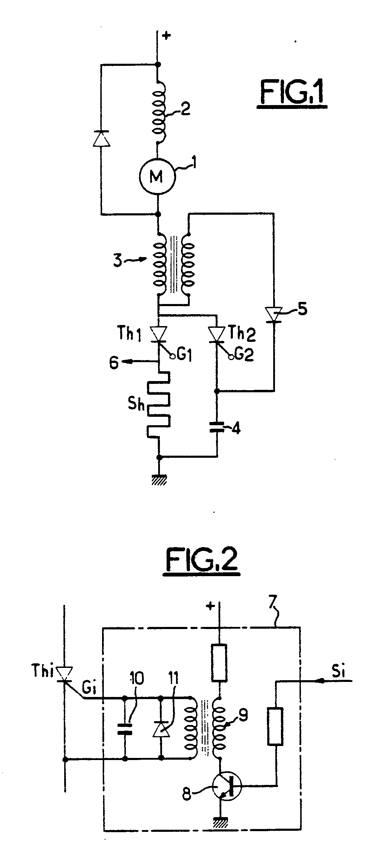

On voit sur la figure 1 un des schémas possible de réalisation du montage Jones. On distingue notamment le moteur électrique avec son induit 1 et son inducteur 2, un autotransformateur 3 dont le primaire se referme à la masse par le thyristor principal Th1, ainsi que le circuit d'extinction avec son thyristor Th2 et le condensateur 4, permettant d'assurer l'extinction du thyristor principal Th1, et enfin la diode 5 permettant de charger le condensateur 4 par l'intermédiaire du secondaire du transformateur 3.

On a simplement inséré conformément à l'invention un shunt Sh entre la masse et le thyristor principal Th1 de manière à élaborer une tension 6 représentative de l'intensité moteur. Toute la commande revient donc à polariser à la fréquence voulue et au rapport de phase voulu les gâchettes G1 et G2 des deux thyristors Th1 et Th2.

Pour cela on peut utiliser le circuit représenté par 7 sur la figure 2, qui permet, à partir d'un signal logique Si arrivant en entrée, de commander la gâchette Gi du thyristor Thi correspondant, étant entendu que ce circuit 7 est utilisé en deux exemplaires, l'indice i prenant respectivement les valeurs 1 et 2.

On y reconnaît en particulier un transistor 8 de commande, commandé par sa base à partir du signal S, et commandant l'intensité du primaire d'un transformateur 9 dont le secondaire commande la gâchette G, avec un condensateur 10 et une diode 11 montés en parallèle.

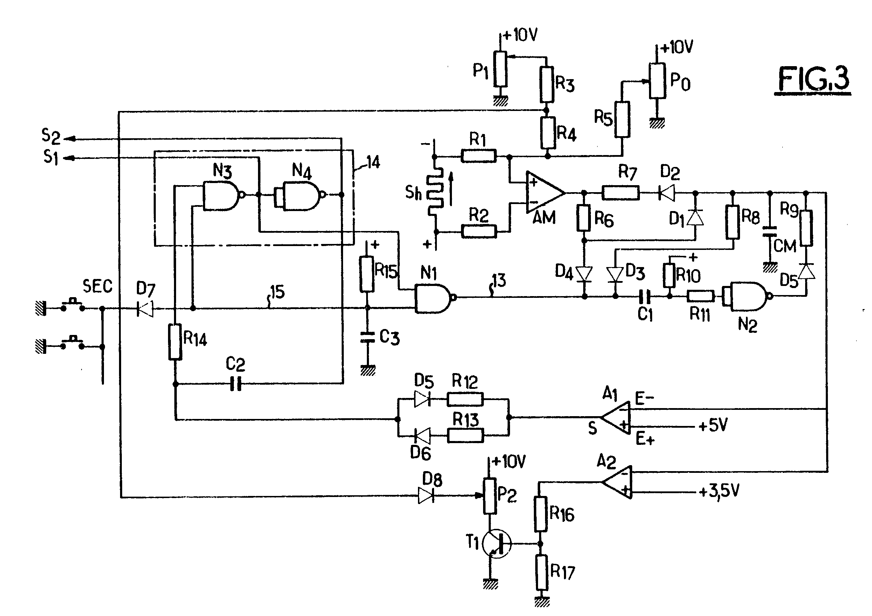

L'essentiel de l'invention réside donc dans le circuit de la figure 3 destiné à élaborer les signaux logiques S1 et S2 de commande des thyristors d'allumage et d'extinction, c'est-à-dire de début et de fin de conduction du hacheur.

On reconnaît sur cette figure le shunt Sh, qui est ici représenté en position inversée par rapport à celle de la figure 1, c'est-à-dire avec la borne de potentiel le plus bas à la partie supérieure. Les deux bornes du shunt sont réunies aux entrées directes et inverseuses d'un amplificateur opérationnel différentiel de mesure AM, par l'intermédiaire de deux résistances d'équilibrage R1 et R2, et en position inversée comme représenté sur la figure, c'est-à-dire que la borne inférieure du shunt au potentiel le plus élevé attaque l'entrée inverseuse.

P1 représente un potentiomètre de commande qui a pour effet, par l'intermédiaire de deux résistances R3 et R4 placées en série, d'élever le potentiel du point 12 situé entre la résistance R1 et l'entrée directe de l'amplificateur AM. De cette manière l'action sur le potentiomètre P1 a pour effet d'élever la tension d'entrée différentielle de l'amplificateur AM, tandis que l'intensité circulant dans le shunt Sh a l'effet inverse.

Un autre potentiomètre P0 permet également, par l'intermédiaire d'une résistance R5, d'élever légèrement le potentiel de ce même point 12 pour le réglage du zéro.

La sortie de l'amplificateur AM commande, par une résistance R6 et une diode D1, la charge d'un condensateur de mémoire CM lorsque la tension de sortie est au niveau haut et sa décharge par une autre diode D2 et une résistance R7 lorsque cette sortie est au niveau bas.

Une porte NON-ET N1 (NAND) a sa sortie 13 normalement à l'état 1, mais lorsque celle-ci passe à l'état zéro (c'est-à-dire lorsque ses deux entrées sont à l'état 1) elle assure également par une diode D3 et une résistance R8 la charge négative du condensateur CM, tandis qu'une diode D4, raccordée entre R6 et D1, annule l'effet de R6-D1 pendant cette charge. Il est prévu en outre une autre porte NON-ET N2 qui, combinée avec une résistance R10 et une résistance R11, ainsi qu'un condensateur C1, constitue un multivibrateur monostable destiné à initialiser l'état de charge du condensateur CM par la diode D5 et la résistance R9.

Le dispositif comprend d'autre part un comparateur inverseur A1 destiné à tester la tension de charge du condensateur CM par rapport à une tension de référence et à délivrer un signal de sortie au niveau haut ou au niveau bas, par l'intermédiaire de deux résistances différentes R12 et R13, grâce à deux diodes respectivement D5 et D6 en série avec chacune de ces résistances.

D'autre part, le dispositif comporte un multivibrateur bistable double 14, constitué par deux portes NON-ET N3 et N4 disposées en série comme représenté sur la figure 3, et qui permet de temporiser la mesure de la tension de charge des condensateurs et la période de non-conduction des thyristors, grâce à la résistance R14 et au condensateur C2 combiné respectivement avec R12 et R13, et à délivrer les impulsions de commande S1 et S2, respectivement de conduction et de non-conduction, pour le circuit de puissance.

La porte NON-ET N1 déjà mentionnée a une entrée connectée à S1 et une autre entrée connectée par une diode D7 à un circuit extérieur de sécurité SEC, cette dernière entrée incorporant une temporisation par résistance R15 et condensateur C3 de manière à temporiser le démarrage et assujettir le dispositif aux diverses sécurités extérieures SEC représentées schématiquement par des boutons-poussoirs.

Enfin le dispositif comporte un second comparateur inverseur A2 qui détecte les intensités de courant de freinage électrique et permet, par un montage potentiométrique R16 et R17, de commander la base d'un transistor T1 qui met au potentiel zéro la deuxième borne d'un potentiomètre P2 de réglage de la surintensité, le curseur de ce potentiomètre étant réuni par une diode D8 au point milieu entre les résistances R3 et R4 du potentiomètre de commande P1, de manière à neutraliser en cas de surintensité la valeur de consigne.

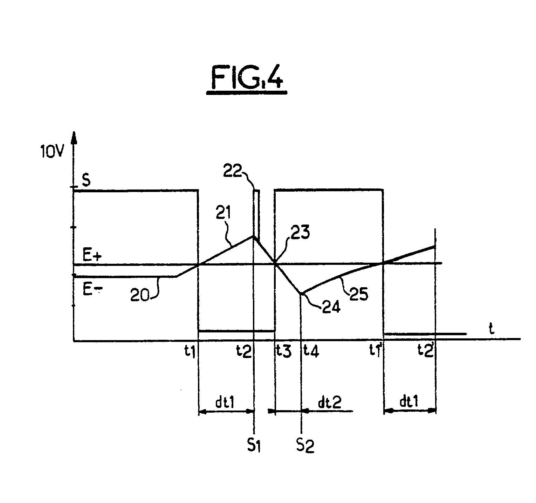

Lorsque le dispositif est au repos, la ligne SEC est au potentiel zéro et par suite la sortie 13 de la porte N1 est au niveau 1. La charge initiale de CM par C1, R10, R11, N2, D5 et R9 ne s'effectue pas. La tension de charge de CM est celle de la sortie de l'amplificateur AM transmise par R6, D1 ou par D2, R7 selon les cas. Ce potentiel correspond à un palier 20 à 4,5 V sur la figure 4, sur laquelle E + et E — représentent les niveaux des entrées directe et inverse de A1 et S la sortie de A1. E — est donc à 4,5 V tandis que E + correspond à la tension de référence + 5 V de A1. Dans ces conditions (E : > E —) la sortie S du comparateur A1 est à 1 (10 V), la sortie de R14 est à 1 et, par suite de N3, S1 est au potentiel zéro : le circuit de puissance ne conduit pas.

Lors de la mise en marche du dispositif, la sécurité est passée à son niveau 1. Après la temporisation opérée par R15 et C3, l'entrée inférieure 15 de la porte N1 atteint le niveau 1. A l'aide du potentiomètre de commande P1 on affiche par exemple une intensité de 10 ampères. La tension de référence de sortie de l'amplificateur AM devient par exemple 6,5 V et par suite, par le réseau R6 D1, la tension du condensateur CM monte de 4,5 à 6,5 V, comme représenté par la courbe ascendante 21 sur la figure 4.

A l'instant t1 où cette courbe ascendante 21 coupe l'horizontale E +, l'entrée inverseuse E — du comparateur A1 devient positive par rapport à l'entrée directe E + et la sortie S bascule pour passer de l'état 1 à l'état zéro. Par le réseau R12, D5, et C2 qui introduit une temporisation dt1, le multivibrateur 14 bascule au temps t2. Ainsi la sortie S1 passe de l'état zéro à l'état 1, le circuit de puissance (figures 1 et 2) est excité et devient conducteur, alimentant alors le moteur, de sorte que le shunt Sh est traversé par un courant. Par ailleurs les deux entrées de la porte N1 étant à l'état 1, sa sortie 13 passe à l'état zéro, ce qui a pour effet, par l'intermédiaire de C1, R10, R11 et la porte N2 d'envoyer une impulsion d'initialisation 22 du condensateur CM par l'intermédiaire de D5 et R9.

L'amplificateur de mesure AM détecte le courant traversant le shunt, et par l'intermédiaire de la résistance R7 et de la diode D2, abaisse la tension du condensateur CM.

A mesure que le courant moteur progresse, la tension de l'entrée E — de l'amplificateur A1 baisse et finit, à l'instant t3, par devenir plus négative que l'entrée E +, de sorte que celui-ci bascule (point 23 sur la figure 4) et sa sortie S passe à l'état 1. Le multivibrateur 14 est alors sollicité par le réseau R13, D6, R14 et C2, et la temporisation dt2 produite par ce réseau permet de mesurer l'accroissement de l'intensité moteur pendant ce temps dt2.

A la fin de cette temporisation dt2 (temps t4), le multivibrateur 14 bascule et la sortie S2 passe de l'état 0 à l'état 1, ce qui rend le circuit de puissance non conducteur. L'accroissement d'intensité moteur pendant le temps dt2 est détecté par l'amplificateur de mesure AM, et la tension obtenue en sortie est mémorisée par le condensateur CM.

Après l'extinction du thyristor principal Th1, le courant débité par la batterie est nul et la tension à la sortie de l'amplificateur de mesure AM reprend donc la tension de 6,5 V correspondant à l'intensité affichée par le potentiomètre de commande P1.

A partir du point 24, le condensateur CM, dont le potentiel est négatif par rapport au potentiel de sortie de l'amplificateur AM, voit sa charge se modifier par l'intermédiaire de la résistance R6 et de la diode D1 suivant la courbe de charge 25 représentée sur la figure 4.

Lorsque l'entrée inverseuse E — du comparateur A1 devient positive par rapport à l'entrée directe E +, la sortie S bascule et revient à l'état zéro, ce qui ramène à l'état du début de cycle, l'instant t'1 correspondant à l'instant t1.

Il résulte de ce qui précède que :

1) le temps de conduction de t2 à t4 est défini par l'intensité absorbée par le moteur, puisqu'il est fonction de la charge initiale du condensateur CM,

2) le temps de non-conduction de t4 à t'2 est défini par l'accroissement d'intensité mesurée pendant le temps dt1 de la première temporisation, et par la tension de référence de l'intensité de commande, tous ces paramètres étant ajustables pour obtenir la régulation désirée.

Dans le cas où l'on affiche une intensité de consigne importante par le potentiomètre de commande P1, et que celle débitée par le moteur est faible, le dispositif de décharge complémentaire intervient par le réseau R8, D3. Si on suppose par exemple que le potentiomètre P1 commande une intensité de 100 ampères, la sortie de l'amplificateur de mesure AM se trouve à 10 V. Si l'intensité moteur est faible, la tension de sortie de l'amplificateur AM ne descendra jamais en dessous de 9 V. Il en résulte que le comparateur A1 ne verra jamais son entrée E — devenir négative par rapport à l'entrée E +. Le dispositif est donc bloqué et il n'y a plus de régulation d'intensité. C'est pour éviter cet inconvénient qu'on rajoute selon l'invention ce dispositif de décharge complémentaire R8 D3 qui permet d'assurer que la courbe 23, 24 ait toujours une pente descendante minimale. Grâce à ce dispositif le fonctionnement dans ce cas particulier devient identique au fonctionnement décrit précédemment.

Dans le cas fréquent où le dispositif d'alimentation est également utilisé pour obtenir un freinage électrique, c'est-à-dire alimenter le moteur en inversion de polarité, les intensités deviennent alors très importantes, comme exposé plus haut, mais le dispositif décrit s'y prête parfaitement bien. Dans ce cas, le deuxième comparateur A2 a la tension de son entrée + par exemple à 3,5 V et son entrée — reliée au condensateur CM. Lorsque, sous l'effet de la pointe du contre-courant de freinage, la tension de A2 devient négative par rapport à l'entrée +, la sortie bascule. Par le transistor T1, le potentiomètre T2 et la diode D8, l'action du potentiomètre de commande P1 se trouve bloquée. Aucune accélération ne peut donc se produire tant que l'amplificateur A2 détecte des pointes de courant de freinage. Par ailleurs la régulation précédemment décrite fonctionne et limite le courant moyen de freinage.

**Revendications**

1. Procédé de commande et de régulation électronique de l'intensité du courant d'alimentation d'un moteur électrique alimenté par une source de courant continu à tension fixe par l'intermédiaire d'un hacheur commandé à partir de signaux logiques d'allumage (S1) et d'extinction (S2), selon lequel on élabore une tension de mesure représentative de l'intensité parcourant le moteur, ainsi qu'une tension de consigne représentative de l'intensité de consigne que l'on désire imposer au moteur et l'on compare les signaux, caractérisé par le fait qu'en fonction du résultat de cette comparaison on produit la charge progressive positive ou négative d'un condensateur de mémoire (CM) dont la tension de charge est elle-même comparée (A1) à une tension de référence, que l'on détermine l'instant (t1) auquel cette tension de charge dépasse ladite tension de référence, puis qu'après un délai temporisé (dt1) on produit (t2) le signal (S1) de début de conduction destiné au hacheur, ce qui a pour effet de réduire progressivement l'écart entre les deux signaux de mesure et de consigne, que lorsque l'on a détecté que le niveau de charge du condensateur de mémoire (CM) repasse par la valeur du signal de référence (t3) on décompte une deuxième temporisation (dt2) pendant laquelle on laisse descendre cette tension du condensateur de mémoire, l'état de charge négative ainsi obtenu au bout de cette temporisation étant fonction de l'intensité dans le moteur, puis que l'on produit après cette temporisation (t4) le signal de début de non-conduction (S2), ce qui produit la remontée de la tension de charge du condensateur de mémoire (CM) qui repasse à nouveau la valeur de référence, et ainsi de suite.

2. Procédé selon la revendication 1, caractérisé par le fait qu'on détecte en outre les surintensités de freinage par comparaison de la tension de charge du condensateur de mémoire (CM) avec une autre valeur de référence (A2), et qu'en fonction de cette détection on bloque l'effet du signal de consigne sur la régulation de l'intensité.

3. Dispositif pour la mise en œuvre du procédé selon une des revendications précédentes, caractérisé par le fait qu'il comporte, en plus d'un shunt (Sh) pour l'élaboration du signal représentatif de l'intensité moteur et des montages potentiométriques (R1 à R5, P0 et P1) pour l'élaboration du signal de consigne, un amplificateur différentiel de mesure (AM) pour la comparaison de ces signaux et l'élaboration d'un niveau de tension qui charge un condensateur de mémoire (CM) par un circuit de charge positive (R6, D1), et un circuit de charge négative (R7, D2), ainsi qu'un comparateur (A1) qui compare le niveau de charge du condensateur de mémoire (CM) à une tension de référence et élabore un signal qui actionne un multivibrateur (14) après une temporisation (C2, R13, D6) pour un sens de basculement, et par une autre temporisation (C2, D5, R12) pour l'autre sens de basculement de ce comparateur (A1).

4. Dispositif selon la revendication 3, caractérisé par le fait qu'il comporte un multivibrateur monostable (C1, R10, R11, N2) destiné à initialiser l'état de charge du condensateur de mémoire CM.

5. Dispositif selon une des revendications 3 et 4, caractérisé par le fait qu'il comporte un dispositif de décharge complémentaire (R8 et D3) assurant un courant de décharge minimum au condensateur de mémoire (CM).

6. Dispositif selon l'une des revendications 3 à 5, caractérisé par le fait qu'il comporte en outre une porte NON ET (N1) raccordée de manière à temporiser le démarrage (R15, C3) et assujettir le dispositif aux différentes sécurités (SEC) nécessaires à la bonne marche de l'ensemble.

7. Dispositif selon l'une des revendications 3 à 6, caractérisé par le fait qu'il comporte un deuxième comparateur inverseur (A2) qui compare la charge du condensateur de mémoire (CM) avec une autre tension de référence pour détecter les surintensités de courant de freinage, et qui actionne un circuit (R16, R17, T1, P2, D8) destiné à bloquer l'effet du signal de consigne (P1, R3, R4).

**Claims**

1. Process for the electronic regulation and control of the feed current of an electric motor fed by a direct current source at a fixed voltage by means of a chopper controlled with reference to firing (S1) and extinction (S2) logic signals, according to which there is generated a measurement voltage representing the current flowing through the motor, as well as a control voltage representing the control current which it is desired to apply to the motor and the signals are compared, characterized in that, as a function of the result of this comparison, there is produced the progressive positive or negative charge of a storage capacitor (CM), the charging voltage of which is itself compared (A1) with a reference voltage, in that the instant (t1) at which this charging voltage exceeds the said reference voltage is determined, and then in that, after a time delay (dt1), the conduction-start signal (S1) intended for the chopper is produced (t2), the effect of this being to reduce progressively the difference between the two measurement and control signals, in that, when it has been detected that the level of charge of the storage capacitor (CM) passes again through the value of the reference signal (t3), a second delay time (dt2) is counted, during which this voltage of the storage capacitor is allowed to fall, the state of negative charge thus obtained at the end of this delay time being a function of the current in the motor, and then in that the non-conduction-start signal (S2) is produced after this delay time (t4), this giving rise to the ascent of the charging voltage of the storage capacitor (CM), which again passes through the reference value, and so on.

2. Process according to Claim 1, characterized in that the excess braking currents are further detected by comparison of the charging voltage of the storage capacitor (CM) with another reference value (A2), and in that, as a function of this detection, the effect of the control signal on the regulation of the current is blocked.

3. Device for carrying out the process according to one of the preceding claims, characterized in that it comprises, in addition to a shunt (Sh) for the generation of the signal representing the motor current and the potentiometer circuits (R1 to R5, P0 and P1) for the generation of the control signal, a differential measurement amplifier (AM) for the comparison of these signals and the generation of a voltage lever which charges a storage capacitor (CM) through a positive charging circuit (R6, D1), and a negative charging circuit (R7, D2), as well as a comparator (A1) which compares the level of charge of the storage capacitor (CM) with a reference voltage and generates a signal which activates a multivibrator (14) after a delay time (C2, R13, D6) for one direction of switching-over, and by another delay time (C2, D5, R12) for the other direction of switching-over of this comparator (A1).

4. Device according to Claim 3, characterized in that it comprises a monostable multivibrator (C1, R10, R11, N2) intended to initialize the condition of charge of the storage capacitor CM.

5. Device according to one of Claims 3 and 4, characterized in that it comprises a supplementary discharge device (R8 and D3) providing a minimum discharge current at the storage capacitor (CM).

6. Device according to one of Claims 3 to 5, characterized in that it further comprises a NAND gate (N1) connected in such a manner as to provide a time delay for starting (R15, C3) and to subject the device to the various safety measures (SEC) required for the proper operation of the assembly.

7. Device according to one of Claims 3 to 6, characterized in that it comprises a second inverting comparator (A2), which compares the charge of the storage capacitor (CM) with another reference voltage in order to detect the excess braking currents, and which activates a circuit (R16, R17, T1, P2, D8) intended to block the effect of the control signal (P1, R3, R4).


**Patentansprüche**

1. Verfahren zum elektronischen Steuern und Regeln des Speisestroms eines Elektromotors, der über einen auf der Basis logischer Zünd- und Löschsignale (S1 bzw. S2) gesteuerten Zerhacker von einer Gleichstromquelle mit fester Spannung gespeist wird, wobei eine Meßspannung gewonnen wird, die für die Stärke des durch den Motor fließenden Stroms kennzeichnend ist, sowie eine Einstellwertspannung, die für den Einstellstrom kennzeichnend ist, mit dem der Motor beaufschlagt werden soll, und wobei man diese Signale miteinander vergleicht, dadurch gekennzeichnet, daß man in Abhängigkeit von dem Ergebnis des Vergleichs eine allmähliche positive oder negative Aufladung eines Speicherkondensators (CM) erzeugt, dessen Ladespannung ihrerseits mit einer Referenzspannung verglichen wird (A1), daß man den Zeitpunkt (t1) bestimmt, in dem diese Ladespannung die Referenzspannung überschreitet, daß man sodann nach einer verzögerungszeit (dt1) das für den Zerhacker bestimmte Signal (S1) für den Beginn (t2) der Leitfähigkeitsphase erzeugt, wodurch der Abstand zwischen dem Meßsignal und dem Einstellsignal allmählich verringert wird, daß man, nachdem man festgestellt hat, daß die Ladespannung des Speicherkondensators (CM) den Wert des Referenzsignals unterschreitet (im Zeitpunkt t3), eine zweite Verzögerungszeit (dt2) ablaufen läßt, während derer man die Spannung des Speicherkondensators (CM) absinken läßt, wobei der so am Ende dieser Verzögerungszeit erreichte negative Ladezustand eine Funktion der Stromstärke in dem Motor ist, und daß man nach dieser verzögerungszeit (im Zeitpunkt t4) das Signal (S2) für den Beginn der Sperrphase erzeugt, das ein Wiederansteigen der Ladespennung des Speicherkondensators (CM) bewirkt, die so von neuem den Referenzwert überschreitet, und so fort.

2. Verfahren nach Anspruch 1, dadurch gekennzeichnet, daß außerdem Überströme beim Bremsen durch Vergleich der Ladespannung des Speicherkondensators (CM) mit einem anderen Referenzwert (in A2) detektiert werden und daß in Abhängigkeit von dieser Detektion die Wirkung des Sollwertsignals auf die Stromregelung blockiert wird.

3. Vorrichtung zur Durchführung des Verfahrens nach einem der vorhergehenden Ansprüche, gekennzeichnet durch einen Nebenschlußwiderstand (Sh) zur Gewinnung des den Motorstrom kennzeichnenden Signals und Potentiometeranordnungen (R1 bis R5, P0 und P1) zur Gewinnung des Einstellwertsignals, einen Differenz-Meßverstärker (AM) zum Vergleichen dieser Signale und zur Erzeugung einer Spannung zum Aufladen eines Speicherkondensators (CM) über eine positive Ladeschaltung (R6, D1) bzw. eine negative Ladeschaltung (R7, D2) sowie einen Komparator (A1), der die Ladespannung des Speicherkondensators (CM) mit einer Referenzspannung vergleicht und ein Signal zur Betätigung eines Multivibrators (14) abgibt, das bei einer der Kipprichtungen des Komparators über ein erstes Verzögerungsglied (C1, R13, D6) und bei der anderen Kipprichtung des Komparators (A1) über ein anderes Verzögerungsglied (C2, D5, R12) wirksam wird.

4. Vorrichtung nach Anspruch 2, gekennzeichnet durch einen monostabilen Multivibrator (C1, R10, R11, N2) zur Initialisierung des Ladezustands des Speicherkondensators (CM).

5. Vorrichtung nach einem der Ansprüche 3 und 4, gekennzeichnet durch eine ergänzende Ladevorrichtung (R8 und D3), die einen Mindestladestrom für den Speicherkondensator (CM) gewährleistet.

6. Vorrichtung nach einem der Ansprüche 3 bis 5, ferner gekennzeichnet durch ein NAND-Glied (N1), das das Anlaufen verzögert (über R15, C3) und die Vorrichtung unter den Einfluß der für einen einwandfreien Betrieb der Anordnung erforderlichen Sicherheiteinrichtungen (SEC) stellt.

7. Vorrichtung nach einem der Ansprüche 3 bis 5, gekennzeichnet durch einen zweiten invertierenden Komparator (A2), der die Ladespannung des Speicherkondensators (CM) zur Erfassung von Überströmen beim Bremsen mit einer zweiten Referenzspannung vergleicht und eine Schaltung (R16, R17, T1, P2, D8) zur Unterdrückung der Wirkung des Einstellwertsignals (P1, R3, R4) betätigt.

## FIG.1

## FIG.2

FIG.3

# FIG.4